# EUROPÄISCHE PATENTSCHRIFT

(11) **EP 2 017 644 B1**
(45) Veröffentlichungstag und Bekanntmachung des Hinweises auf die Patenterteilung: **13.01.2010**
(21) Anmeldenummer: 07014293.0
(22) Anmeldetag: 20.07.2007
(51) Int. Cl.: G01S 7/40

(54) **Verfahren und Messvorrichtung zur Erfassung der Kolbenposition eines Kolbens in einem fluidischen Zylinder mittels einer Mikrowellen-Koppelsonde**
Method and measuring device for recording the piston position of a piston in a liquid cylinder via a microwave coupling sensor
Procédé et dispositif de mesure destinés à l'enregistrement de la position d'un piston dans un dans un cylindre fluidique à l'aide d'une sonde de couplage à micro-ondes

(43) Veröffentlichungstag der Anmeldung: 21.01.2009
(73) Patentinhaber: FESTO AG & Co. KG, 73734 Esslingen (DE)
(72) Erfinder: Reininger, Thomas, Dr.rer. nat, 73249 Wernau (DE); Maier, Marcus, Dipl.-Ing., 70565 Stuttgart (DE); Geisbusch, Lothar, Dr.-Ing., 73760 Ostfildern (DE)
(74) Vertreter: Vetter, Hans

(56) Entgegenhaltungen:
- EP-A- 1 752 665
- WO-A-99/31463
- DE-A1- 4 332 071
- DE-A1- 19 924 755
- DE-A1-102005 009 702
- DISCLOSED ANONYMOUSLY: "Microwave Piston Position Detection" RESEARCH DISCLOSURE, MASON PUBLICATIONS, HAMPSHIRE, GB, Bd. 279, Juli 1987 (1987-07), Seiten 435A-435B, XP002104705 ISSN: 0374-4353

## Beschreibung

Die Erfindung betrifft ein Verfahren zur Erfassung der Kolbenposition eines Kolbens in einem fluidischen Zylinder gemäß dem Oberbegriff des Anspruchs 1 sowie eine Messvorrichtung zur Durchführung des Verfahrens gemäß dem Oberbegriff des Anspruchs 4.

Aus der WO 99/31463 A ist ein derartiges Verfahren und eine derartige Messvorrichtung bekannt, wobei eine als Ringsonde ausgebildete Koppelsonde im Lagerdeckel des fluidischen Zylinders integriert ist.

Aus "Microwave Piston Position Detection", Research Disclosure, Mason Publications, Hampshire, Bd. 279, Juli 1987, Seiten 435A - 435B, ISSN: 0374-4353 ist ebenfalls ein derartiges Verfahren und eine derartige Messvorrichtung bekannt, wobei eine als Stabsonde ausgebildete Mikrowellen-Koppelsonde in einen Pufferhohlraum eines Zylinderdeckels angeordnet ist.

Eine ähnliche Messvorrichtung ist auch aus der EP 1 752 665 A1 bekannt, bei der die Mikrowellen-Koppelsonde mit einem scheibenförmigen Antennenhohlkörper versehen ist.

Schließlich ist aus der DE 102 05 904 A1 eine Messvorrichtung bekannt, die zur Positionsbestimmung des Kolbens dient. Dies erfolgt über eine direkte oder indirekte Laufzeitmessung der abgesandten und reflektierten Hohlleiterwelle, insbesondere durch Erfassung der Phasenverschiebung. Ein Koaxial-Hohlleiter-Übergang wandelt die koaxialen Leitungswellen und damit die Spannung in die Feldstärke der Hohlleiterwelle um. Dieser Übergang besteht aus der eine Antenne bildenden Mikrowellen-Koppelsonde mit umgebenden Kunststoffmaterialien, die die Antenne schützen und üblicherweise einen Kolbenanschlag bilden.

Der Nachteil der bekannten Messverfahren besteht darin, dass sich die Transmissionseigenschaften des Koaxial-Hohlleiter-Übergangs im Verlauf der Lebensdauer des Mikrowellen-Positionssensors ändern können, zum Beispiel durch eine Änderung des Feuchtigkeitsgehalts der verwendeten Kunststoffmaterialien, durch die Anlagerung von Schmutz und/oder Fett und/oder durch eine Veränderung toleranzbedingter Luftspalte. Der Mikrowellensensor kann prinzipbedingt nicht unterscheiden, ob eine Phasenveränderung zwischen hin- und rücklaufender Welle tatsächlich durch eine Verschiebung des Kolbens oder aber durch eine Änderung der Transmission des Koaxial-Hohlleiter-Übergangs zustande gekommen ist. Dementsprechend können die Positionsmesswerte im Laufe der Zeit driften.

Eine Aufgabe der vorliegenden Erfindung besteht darin, ein Positionsverfahren und eine Positionsmessvorrichtung für die Kolbenposition aufzuzeigen, bei dem beziehungsweise bei der eine Veränderung der Transmissionseigenschaften des Koaxial-Hohlleiter-Übergangs, also eine Veränderung der die Mikrowellen-Koppelsonde umgebenden Kunststoffumgebung, für die Messgenauigkeit keine oder nur noch eine unwesentliche Rolle mehr spielt.

Diese Aufgabe wird erfindungsgemäß durch ein Verfahren mit den Merkmalen des Anspruchs 1 und durch eine Messvorrichtung mit den Merkmalen des Anspruchs 4 gelöst.

Die Vorteile des erfindungsgemäßen. Verfahrens und der erfindungsgemäßen Messvorrichtung bestehen insbesondere darin, dass erfindungsgemäß keine Laufzeit- beziehungsweise Phasenverschiebung mehr gemessen wird, sondern die Feldstärke im Hohlleiter vor dem Kunststoffbereich, der üblicherweise als Kolbenanschlageinrichtung ausgebildet ist. Eine Veränderung dieses Kunststoffbereichs hat somit praktisch keinen Einfluss auf das Messergebnis mehr. Die Feldstärke im Innern des Hohlleiters ergibt sich aus der Überlagerung zwischen hin- und rücklaufender Welle. Unmittelbar am Kolben ist die tangentiale elektrische Feldstärke Null, da der Kolben einen Kurzschluss darstellt. Der Betrag der stehenden Welle an einem bestimmten Ort zwischen Koppelsonde und Kolben ist ein Maß für die Kolbenposition. Für eine Messung liegt dieser Ort bevorzugt in der Umgebung des Übergangsbereiches zwischen der Kolbenanschlageinrichtung und dem Hohlleiterbereich. Für den Verlauf der Feldstärke sind vor allem die Reflexionseigenschaften des Kolbens und das Ausbreitungsverhalten im freien Hohlleiter verantwortlich. Beides verändert sich im Laufe der Lebensdauer praktisch nicht. Die eigentliche Bestimmung der Position aus den gemessenen Feldstärke-Beträgen erfolgt auf dieselbe Art und Weise wie die Positionsbestimmungen aus den Gleichspannungen am Mischerausgang beim herkömmlichen Verfahren, die den Kosinus aus der Phasenverschiebung zwischen hin- und rücklaufender Welle repräsentieren. Das bedeutet, dass hinsichtlich der Signalverarbeitung das bestehende Prinzip weiterverwendet werden kann. Dabei kann zur Vermeidung von Mehrdeutigkeiten eine Messung bei zwei oder mehr Frequenzen erforderlich sein, sofern der Messbereich größer als ¼ Hohlleiterwellenlänge ist, also größer als ca. 60 % des Zylinderdurchmessers, wovon im Allgemeinen auszugehen ist.

Der Betrag der Feldstärke wird an wenigstens zwei Stellen im Bereich der Kolbenanschlageinrichtung gemessen, wobei durch Vergleich der Messwerte Diagnoseinformationen abgeleitet werden können, da die Signale von beiden Messstellen grundsätzlich gleich sein sollten. Zur Messung sind hierzu insbesondere zwei als Monopole ausgebildete Feldstärken-Messsonden an radial gegenüberliegenden Stellen im Bereich der Zylinderwandung angeordnet. Insbesondere bei Verwendung von E01-Hohlleiter-Modes kann es ohnehin erforderlich sein, zur Vermeidung der Anregung unerwünschter Wellentypen, zum Beispiel des H11-Wellentyps, zwei Monopole an gegenüberliegenden Stellen anzuordnen.

Durch die in den Unteransprüchen aufgeführten Maßnahmen sind vorteilhafte Weiterbildungen und Verbesserungen des im Anspruch 1 angegebenen Verfahrens und der im Anspruch 4 angegebenen Messvorrichtung möglich.

Zur Verminderung der Rückwirkung der rücklaufenden Welle auf den Mikrowellen-Sender beziehungsweise Mikrowellen-Generator empfiehlt sich die Verwendung eines Dämpfungsglieds zwischen der Koppelsonde und dem Mikrowellen-Generator.

Da die Ausgangsleistung des Mikrowellen-Generators einen Einfluss auf das Messergebnis hat, sollte diese Ausgangsleistung möglichst konstant sein, wozu der Mikrowellen-Generator eine HF-Leistungsregelung aufweisen sollte. Alternativ oder zusätzlich kann der Mikrowellen-Generator auch mit der Auswerteeinrichtung zur Übermittlung einer Information über die tatsächliche Sendeleistung verbunden sein, wobei dann das Messergebnis in Abhängigkeit der Sendeleistung korrigiert werden kann.

Das mittels einer Antennenanordnung beziehungsweise wenigstens einer Feldstärken-Messsonde erfasste Feldstärke-Signal kann entweder als HF-Signal über eine HF-Leitung der Auswerteeinrichtung zugeführt werden oder aber es wird mittels eines Mischers in seiner Frequenz herabgesetzt und als ZF-Signal der Auswerteeinrichtung zugeführt. Durch diese niedrigere ZF-Frequenz müssen an die Leitung keine so hohen Anforderungen mehr gestellt werden. Andererseits wird ein zusätzlicher Mischer benötigt.

In einer anderen Art der Messsignalauswertung wird das mittels der Antennenanordnung beziehungsweise der Feldstärke-Messsonde erfasste Feldstärke-Signal gleichgerichtet und als Gleichspannungssignal der Auswerteeinrichtung zugeführt, vorzugsweise über ein Tiefpassfilter. Hierzu ist die wenig-stens eine Feldstärken-Messsonde in vorteilhafter Weise unmittelbar an eine insbesondere als Diode ausgebildete Gleichrichtereinrichtung angeschlossen, die mit der Auswerteeinrichtung direkt oder über das Tiefpassfilter verbunden ist. Dabei ist die Diode bevorzugt am Fußpunkt der als Monopol ausgebildeten Feldstärken-Messsonde angeordnet, das heißt, die empfangene Hochfrequenz-Spannung wird an Ort und Stelle gleichgerichtet, und die Überführung als Gleichspannung zur Auswerteeinrichtung ist dann völlig unproblematisch.

Ausführungsbeispiele der Erfindung sind in der Zeichnung dargestellt und in der nachfolgenden Beschreibung näher erläutert. Es zeigen:
- Figur 1: einen fluidischen Zylinder mit einer Mikrowellen-Messvorrichtung, die zwei radial gegenüberliegend angeordnete Monopole zur Feldstärken-Messung aufweist,
- Figur 2: ein Blockschaltbild zur Erläuterung der Wirkungsweise bei Zuführung des Feldstärke-Signals als Gleichspannung zur Auswerteeinrichtung,
- Figur 3: eine Zuführung des Feldstärke-Signals zur Auswerteeinrichtung als ZF-Signal und
- Figur 4: eine Zuführung des Feldstärke-Signals zur Auswerteeinrichtung als HF-Signal.

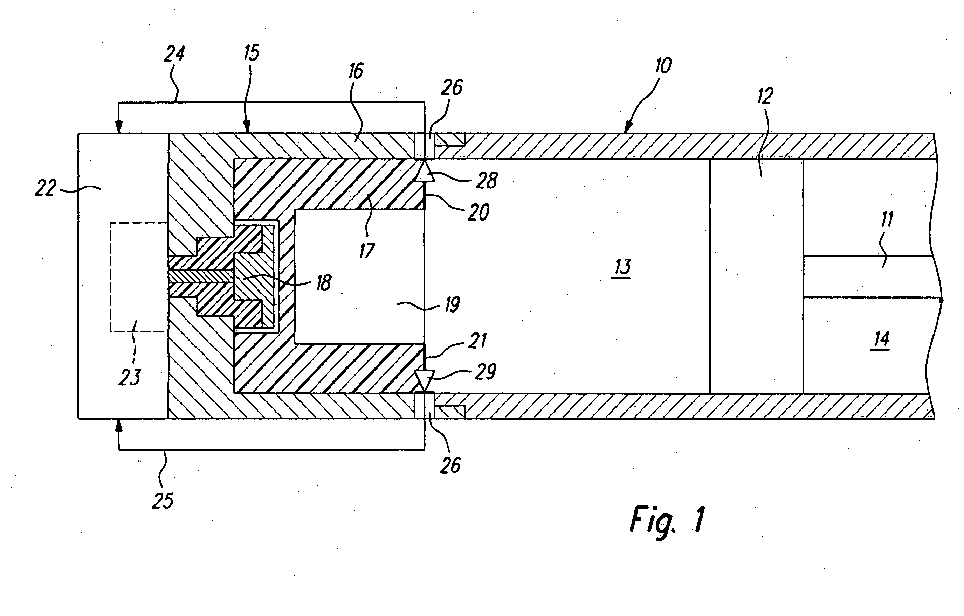

Bei dem in Figur 1 dargestellten Ausführungsbeispiel ist ein fluidischer Zylinder 10 dargestellt, in dem ein mit einer Kolbenstange 11 versehener Kolben 12 verschiebbar geführt ist. Der Kolben 12 teilt den Innenraum des Zylinders 10 in zwei Zylinderkammern 13, 14 auf, wobei die fluidischen Zuleitungen zu den beiden Zylinderkammern 13, 14 und eine entsprechende fluidische Steuerung zur Vereinfachung nicht dargestellt sind. Der von der Kolbenstange 11 entfernte Endbereich des Zylinders 10 ist durch einen Zylinderdeckel 15 abgeschlossen. Auf Seiten der Kolbenstange 11 kann der Zylinder 10 ebenfalls durch einen nicht näher dargestellten Zylinderdeckel abgeschlossen sein, durch den die Kolbenstange 11 hindurchgeführt ist.

Der Zylinderdeckel 15 besteht aus einem metallischen, topfförmigen Außenbereich 16, in den ein ebenfalls topfförmiger Einsatz 17 aus einem dielektrischen Material, beispielsweise aus Kunststoff, eingesetzt ist. Zur Einkopplung von Mikrowellen in die als Hohlleiter wirkende Zylinderkammer 13 dient eine Koppelsonde 18, die konzentrisch am Zylinderdeckel 15 angeordnet ist und die in den Einsatz 17 aus Kunststoff hineinreicht. Die im Ausführungsbeispiel als Antenne dienende Koppelsonde 18 ist als konzentrischer Monopol mit Dachkapazität dargestellt und koppelt eine E01-Welle in den Zylinder 10 ein. Andere Ausführungen von Koppelsonden 18, die auch aus mehreren Einzelantennen beziehungsweise Monopolen bestehen können, sind im Rahmen der Erfindung ebenfalls möglich, wobei auch unterschiedliche Hohlleiter-Moden erzeugt werden können.

Die Koppelsonde 18 bildet zusammen mit dem umgebenden Kunststoff des Einsatzes 17 einen Koaxial-Hohlleiter-Übergang zur Umwandlung der koaxialen Leitungswellen und damit der Spannung in die Feldstärke der Hohlleiterwelle. Dieser Einsatz 17 schützt die Koppelsonde 18 und bildet einen Kolbenanschlag für den Kolben 12. Ein zylindrischer, konzentrischer, zum Kolben 12 hin offener Hohlraum 19 im Einsatz 17 aus Kunststoff dient zum einen zur Optimierung der Einkoppelbedingungen für die Mikrowelle und kann auch zur Aufnahme eines nicht dargestellten Pufferkolbens dienen, der in an sich bekannter Weise am Kolben 12 angebracht sein kann und eine Endlagendämpfung bewirkt.

Zwei als Feldstärke-Sonden dienende Monopole 20, 21 sind radial entgegengesetzt an der freien endseitigen Ringfläche des Einsatzes 17 aus Kunststoff angebracht und erstrecken sich bis zum metallischen Außenbereich 16 des Zylinderdeckels 15 oder nahezu bis zu diesem. Diese Monopole 20, 21 werden durch die Mikrowellen bezüglich der als Masse dienenden metallischen Rohrwandung des Außenbereichs 16 erregt, wobei das erzeugte Hochfrequenzsignal (HF-Signal) ein Maß für die Feldstärke im Innern des Hohlleiters ist, die sich aus der Überlagerung zwischen der zum Kolben 12 hinlaufenden und von dort rücklaufenden Welle ergibt. Unmittelbar am Kolben ist die tangentiale elektrische Feldstärke Null, da der Kolben einen Kurzschluss darstellt.

Die in den Monopolen 20, 21 erzeugten Feldstärke-Signale werden einer elektronischen Auswerteeinrichtung 22 zugeführt, die auch einen Mikrowellen-Generator 23 enthalten kann, der zur Erzeugung der Mikrowelle mit der Koppelsonde 18 verbunden ist.

Die elektronische Auswerteeinrichtung 22 ist im dargestellten Ausführungsbeispiel an der Stirnseite des Zylinderdeckels 15 angeordnet. Sie kann selbstverständlich auch im Zylinderdeckel 15 integriert oder extern angeordnet sein, wobei Auswerteeinrichtung 22 und Mikrowellen-Generator 23 auch separate Module sein können, die an unterschiedlichen Stellen angeordnet sind.

Im dargestellten Ausführungsbeispiel sind die Monopole 20, 21 über externe Kabel 24, 25 mit der Auswerteeinrichtung 22 verbunden, die durch Durchführungen 26 in der Umfangswandung des Zylinderdeckels 15 hindurchgeführt sind. Diese Kabel 24, 25 können auch intern im Zylinderdeckel 15 verlaufen.

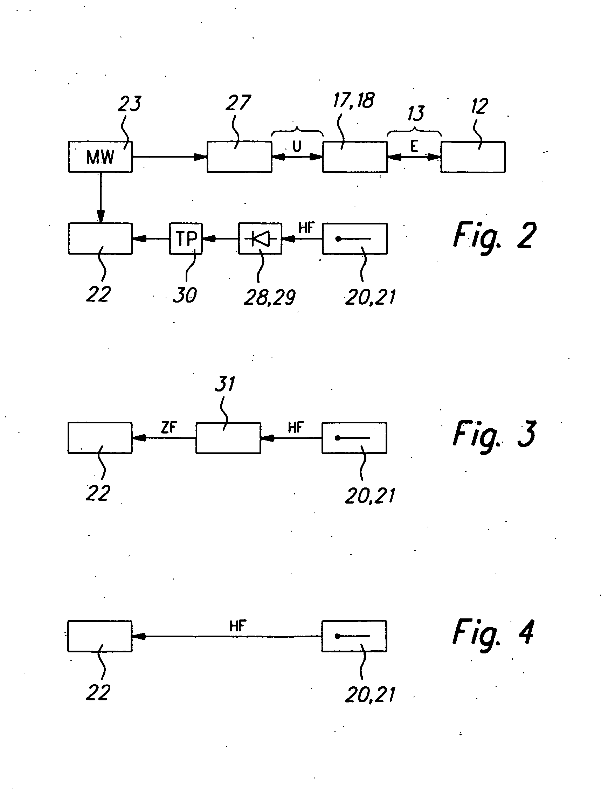

Die Wirkungsweise des in Figur 1 dargestellten Ausführungsbeispiels wird im Folgenden anhand des in Figur 2 dargestellten Blockschaltbilds erläutert, wobei in den Figuren 3 und 4 Alternativen zur Signalübertragung zwischen den Monopolen 20, 21 und der Auswerteeinrichtung 22 dargestellt sind.

Im Gegensatz zur herkömmlichen Laufzeitmessung durch Phasenvergleich zwischen der zum Kolben 12 hinlaufenden und von dort zurücklaufenden Welle wird gemäß der vorliegenden Erfindung kein Richtkoppler zur Trennung von hin- und rücklaufender Welle mehr benötigt. Zur Verminderung der Rückwirkung der rücklaufenden Welle auf den Mikrowellen-Generator 23 kann dieser mit einem entsprechenden Dämpfungsglied 27 versehen sein oder ein entsprechendes Dämpfungsglied 27 ist ihm vorgeschaltet. Der aus der Koppelsonde 18 und dem Einsatz 17 aus Kunststoff bestehende Koaxial-Hohlleiter-Übergang wandelt die koaxialen Leitungswellen und damit die Spannung U in die Feldstärke der Hohlleiterwelle E um. Dabei ergibt sich die Spannung jeweils als Summe der Spannung der hinlaufenden und der rücklaufenden Leitungswelle. Entsprechend ergibt sich die Feldstärke der Hohlleiterwelle aus der Summe der Feldstärken der hinlaufenden und rücklaufenden Hohlleiterwelle. Der Kolben 12 stellt einen positionsveränderlichen Kurzschluss dar, an dem die Hohlleiterwelle reflektiert wird, sodass sich im Hohlleiter eine stehende Welle ergibt, deren Feldstärke mittels der Monopole 20, 21 gemessen wird.

Zur Erfassung der Feldstärke ist prinzipiell nur eine Feldstärke-Sonde beziehungsweise ein Monopol 20 beziehungsweise 21 erforderlich. Insbesondere bei Verwendung des E01-Hohlleiter-Modes kann es jedoch erforderlich sein, zur Vermeidung der Anregung unerwünschter Wellentypen, zum Beispiel des H11-Wellentyps, zwei symmetrisch an gegenüberliegenden Seiten angeordnete Feldstärke-Sonden beziehungsweise Monopole 20, 21 vorzusehen. Dies hat gleichzeitig den Vorteil, dass in der Auswerteeinrichtung 22 die beiden Signale miteinander verglichen werden können, sodass eine gegenseitige Überprüfung beziehungsweise Diagnose erreicht wird. Weiterhin haben zwei symmetrische Monopole den Vorteil, dass sie für den Empfang verschiedener Hohlleiterwellentypen, zum Beispiel des E01-Wellentyps und des H11-Wellentyps, geeignet sind.

Am Fußpunkt der Monopole 20, 21, also am der Umfangswandung des Zylinderdeckels 15 zugewandten Endbereich, ist je eine Diode 28, 29 angeordnet, durch die die empfangene Hochfrequenz-Spannung unmittelbar an der Empfangsstelle gleichgerichtet wird, sodass sie als Gleichspannung der Auswerteeinrichtung 22 zugeführt werden kann. Dies kann bevorzugt über ein Tiefpassfilter 30 erfolgen.

Die Ausgangsleistung des Mikrowellen-Generators 23 sollte möglichst konstant sein, um einen leistungsabhängigen Einfluss auf das Messergebnis zu vermeiden. Die Leistung des Mikrowellen-Generators 23 sollte daher geregelt sein. Alternativ oder zusätzlich kann eine Information über die tatsächliche Sendeleistung der Auswerteeinrichtung 22 zugeführt werden, damit dort bei sich verändernder Sendeleistung eine entsprechende Kompensation des Messergebnisses durchgeführt werden kann.

Beeinflusst werden kann das Messergebnis auch durch Verunreinigungen, zum Beispiel Fettablagerungen oder Wassertropfen an den Monopolen 20, 21. Da es unwahrscheinlich ist, dass an beiden Monopolen genau dieselbe Menge und Art von Verunreinigungen angelagert wird, kann eine Diskrepanz zwischen den beiden Messwerten eine Überprüfung einleiten. Im Falle von Kondenswasser könnte auch eine Heizung des Bereichs um die Monopole 20, 21 vorgesehen sein.

Bei der in Figur 3 dargestellten Variante für eine Signalzuführung von den Monopolen 20, 21 zur Auswerteeinrichtung 22 ist anstelle einer Diode 28 beziehungsweise 29 jeweils ein Mischer 31 am Monopolfußpunkt angebracht, durch den die erfasste Hochfrequenz-Spannung auf eine Zwischenfrequenz (ZF) heruntergesetzt wird. Die Zuführung dieser Zwischenfrequenz zur Auswerteeinrichtung 22 kann infolge der niedrigeren Frequenz mit geringeren Kosten und geringerem Aufwand erfolgen.

Eine dritte Variante ist in Figur 4 dargestellt. Dort wird die erfasste Hochfrequenz (HF) direkt als solche über eine Hochfrequenz-Leitung der Auswerteeinrichtung 22 zugeführt. Eine solche Hochfrequenz-Leitung ist beispielsweise eine Koaxial- oder Microstrip-Leitung.

## Patentansprüche

1. Verfahren zur Erfassung der Kolbenposition eines Kolbens in einem fluidischen Zylinder, bei dem eine Hohlleiterwelle durch eine in oder an einem Zylinderdeckel (15) des Zylinders (10) angeordnete Mikrowellen-Koppelsonde (18) in den angrenzenden Zylinderraum (13) eingekoppelt wird, wobei im Bereich einer Kolbenanschlageinrichtung und/oder Sondeneinbettung (17) im angrenzenden Zylinderraum (13) der Betrag der Feldstärke der stehenden Welle erfasst wird, die sich'aus der Überlagerung von zum Kolben (12) hinlaufender und vom Kolben (12) reflektierter Welle ergibt, und wobei aus diesem Betrag die Position des Kolbens (12) in einer Auswerteeinrichtung (22) abgeleitet wird, und der Betrag der Feldstärke an wenigstens zwei radial gegenüberliegenden Stellen im Bereich der Kolbenanschlageinrichtung und/oder Sondeneinbettung (17) gemessen wird, **dadurch gekennzeichnet, dass** durch Vergleich der Messwerte Diagnoseinformationen abgeleitet werden, indem bei einer Diskrepanz zwischen den beiden Messwerten eine Überprüfung eingeleitet wird.

2. Verfahren nach Anspruch 1, **dadurch gekennzeichnet, dass** das mittels einer Antennenanordnung (20, 21) erfasste Feldstärke-Signal als HF-Signal oder als mittels eines Mischers in seiner Frequenz herabgesetztes ZF-Signal der Auswerteeinrichtung (22) zugeführt wird.

3. Verfahren nach Anspruch 1, **dadurch gekennzeichnet, dass** das mittels einer Antennenanordnung (20, 21) erfasste Feldstärke-Signal gleichgerichtet und als Gleichspannungssignal der Auswerteeinrichtung (22) zugeführt wird, insbesondere über ein Tiefpassfilter (30).

4. Messvorrichtung zur Erfassung der Kolbenposition eines Kolbens in einem fluidischen Zylinder, mit einer mit einem Mikrowellen-Generator (23) verbundenen Koppelsonde (18) in oder an einem Zylinderdeckel (15) des Zylinders (10) zur Einkopplung einer Hohlleiterwelle in den angrenzenden Zylinderraum (13), wobei am dem Kolben (12) zugewandten Endbereich einer dielektrischen Kolbenanschlageinrichtung und/oder Sondeneinbettung (17) im angrenzenden Zylinderraum (13) wenigstens eine den Betrag der Feldstärke der stehenden Welle im Zylinderraum (13) erfassende Feldstärken-Messsonde (20, 21) angeordnet ist, die mit einer aus diesem Betrag der Feldstärke die Position des Kolbens (12) bestimmenden Auswerteeinrichtung (22) verbunden ist, wobei zwei insbesondere als Monopole ausgebildete Feldstärken-Messsonden (20, 21) an radial gegenüberliegenden Stellen im Bereich der Zylinderwandung angeordnet sind, **dadurch gekennzeichnet, dass** durch Vergleich der Messwerte Diagnoseinformationen abgeleitet werden, in dem bei einer Diskrepanz zwischen den beiden Messwerten eine Überprüfung eingeleitet wird.

5. Messvorrichtung nach Anspruch 4, **dadurch gekennzeichnet, dass** ein die vom Kolben (12) reflektierte rücklaufende Welle dämpfendes Dämpfungsglied (27) zwischen der Koppelsonde (18) und dem Mikrowellen-Generator (23) angeordnet ist.

6. Messvorrichtung nach Anspruch 4 oder 5, **dadurch gekennzeichnet, dass** der Mikrowellen-Generator (23) eine HF-Leistungsregelung aufweist und/oder mit der Auswerteeinrichtung (22) zur Übermittlung von Informationen über die tatsächliche Sendeleistung verbunden ist.

7. Messvorrichtung nach einem der Ansprüche 4 bis 6, **dadurch gekennzeichnet, dass** die wenigstens eine Feldstärken-Messsonde (20, 21) über eine HF-Leitung mit der Auswerteeinrichtung (22) verbunden ist.

8. Messvorrichtung nach einem der Ansprüche 4 bis 6, **dadurch** gekenntzeichnet, dass die wenigstens eine Feldstärken-Messsonde (20, 21) unmittelbar an einem Mischer (31) zur Herabsetzung der Frequenz des HF-Signals in ein ZF-Signal angeschlossen ist, der mit der Auswerteeinrichtung (22) verbunden ist.

9. Messvorrichtung nach einem der Ansprüche 4 bis 6, **dadurch gekennzeichnet, dass** die wenigstens eine Feldstärken-Messsonde (20, 21) unmittelbar an eine insbesondere als Diode (28, 29) ausgebildete Gleichrichteranordnung angeschlossen ist, die mit der Auswerteeinrichtung (22) vorzugsweise über ein Tiefpassfilter (30) verbunden ist.

10. Messvorrichtung nach Anspruch 9, **dadurch gekennzeichnet, dass** die Diode (28, 29) am Fußpunkt der als Monopol ausgebildeten Feldstärken-Messsonde (20, 21) angeordnet ist.

## Claims

1. Method for detecting the piston position of a piston in a fluid cylinder, wherein a waveguide wave is coupled through a microwave coupling probe (18) provided in or on a cylinder cover (15) of the cylinder (10) into the adjoining cylinder chamber (13), wherein, in the region of a piston stop device and/or probe embedding part (17) in the adjoining cylinder chamber (13), the value of the field strength of the stationary wave resulting from the superposition of the wave running to the piston (12) and the wave reflected by the piston (12) is detected, and wherein the position of the piston (12) is derived from this value in an evaluation device (22) and the value of the field strength is measured in at least two positions lying radially opposite each other in the region of the piston stop device and/or probe embedding part (17), **characterised in that** diagnostic information is derived from comparing the measured values by initiating a check if there is any discrepancy between the two measured values.

2. Method according to claim 1, **characterised in that** the field strength signal detected by means of an aerial arrangement (20, 21) is fed to the evaluation device (22) as an HF signal or as an IF signal with a frequency reduced by means of a mixer.

3. Method according to claim 1, **characterised in that** the field strength signal detected by means of an aerial arrangement (20, 21) is rectified and fed to the evaluation device (22) as a DC signal, in particular via a low-pass filter (30).

4. Measuring device for detecting the piston position of a piston in a fluid cylinder, comprising a coupling probe (18) connected to a microwave generator (23) and located in or on a cylinder cover (15) of the cylinder (10) and provided for coupling a waveguide wave into the adjoining cylinder chamber (13), wherein at least one field strength measuring probe (20, 21) detecting the value of the field strength of the stationary wave in the cylinder chamber (13) and connected to an evaluation device (22) determining the position of the piston (12) from this field strength value is provided in that end region of a dielectric piston stop device and/or probe embedding part (17) which faces the piston (12) in the adjoining cylinder chamber (13), two field strength measuring probes (20, 21) designed in particular as monopoles being disposed in radially opposite positions in the region of the cylinder wall, **characterised in that** diagnostic information is derived from comparing the measured values by initiating a check if there is any discrepancy between the two measured values.

5. Measuring device according to claim 4, **characterised in that** an attenuator (27) is provided between the coupling probe (18) and the microwave generator (23) for the attenuation of the wave reflected by the piston (12).

6. Measuring device according to claim 4 or 5, **characterised in that** the microwave generator (23) comprises an HF power control and/or is connected to the evaluation device (22) for the transmission of information on actual transmission power.

7. Measuring device according to any of claims 4 to 6, **characterised in that** the at least one field strength measuring probe (20, 21) is connected to the evaluation device (22) via an HF line.

8. Measuring device according to any of claims 4 to 6, **characterised in that** the at least one field strength measuring probe (20, 21) is directly connected to a mixer (31) connected to the evaluation device (22) for reducing the FH signal to an IF signal.

9. Measuring device according to any of claims 4 to 6, **characterised in that** the at least one field strength measuring probe (20, 21) is directly connected to a rectifier arrangement designed in particular as a diode (28, 29) and preferably connected to the evaluation device (22) via a low-pass filter (30).

10. Measuring device according to claim 9, **characterised in that** the diode (28, 29) is located at the low end of the field strength measuring probe (20, 21) designed as a monopole.

## Revendications

1. Procédé pour la détection de la position d'un piston dans un cylindre fluidique, dans lequel une onde de guide d'ondes est injectée par une sonde de couplage à micro-ondes (18) disposée dans ou sur un couvercle de cylindre (15) du cylindre (10) dans l'espace de cylindre (13) adjacent, tandis que dans la zone d'un dispositif de butée du piston et/ou d'un encastrement de sonde (17) ), le degré d'intensité de champ de l'onde stationnaire est détecté dans l'espace de cylindre adjacent (13), lequel degré résulte de la superposition de l'onde allant vers le piston (12) et de l'onde réfléchie par le piston (12), et que l'on déduit à partir de ce degré d'intensité la position du piston (12) dans une unité d'analyse (22), et que le degré d'intensité de champ est mesuré à au moins deux emplacements se faisant face radialement dans la zone du dispositif de butée du piston et/ou de l'encastrement de la sonde (17),
**caractérisé en ce que**, grâce à une comparaison des valeurs mesurées, des informations de diagnostic sont déduites tout en lançant une vérification en cas d'écart entre les deux valeurs mesurées.

2. Procédé selon la revendication 1, **caractérisé en ce que** le signal d'intensité de champ détecté au moyen d'un réseau d'antennes (20, 21) est acheminé, en tant que signal HF ou signal FI à fréquence abaissée au moyen d'un mélangeur, au dispositif d'analyse (22).

3. Procédé selon la revendication 1, **caractérisé en ce que** le signal d'intensité de champ détecté au moyen d'un réseau d'antennes (20, 21) est redressé et est acheminé vers l'unité d'analyse (22) en tant que signal à tension continue, en particulier via un filtre passe-bas (30).

4. Dispositif de mesure pour détecter la position d'un piston dans un cylindre fluidique, avec une sonde de couplage (18) en liaison avec un générateur de micro-ondes (23) dans ou sur un couvercle de cylindre (15) du cylindre (10) pour injecter une onde de guide d'ondes dans l'espace de cylindre adjacent (13), tandis que, sur la zone d'extrémité tournée vers le piston (12) d'un dispositif de butée du piston et/ou d'un encastrement de sonde diélectrique (17), au moins une sonde de mesure d'intensité du champ (20, 21) détectant le degré d'intensité de champ de l'onde stationnaire dans l'espace de cylindre (13) est disposée dans l'espace de cylindre adjacent (13), laquelle est reliée à un dispositif d'analyse (22) déterminant, à partir de ce degré d'intensité de champ, la position du piston (12), deux sondes de mesure d'intensité de champ (20, 21) réalisées en particulier en tant que monopôles étant disposées dans des emplacements situés radialement en vis-à-vis dans la zone de paroi de cylindre, **caractérisé en ce que**, grâce à une comparaison des valeurs mesurées, des informations de diagnostic sont déduites tout en lançant une vérification en cas d'écart entre les deux valeurs mesurées.

5. Dispositif de mesure selon la revendication 4, **caractérisé en ce qu'**un élément d'amortissement (27) amortissant l'onde de retour réfléchie par le piston (12) est disposé entre la sonde de couplage (18) et le générateur de micro-ondes (23).

6. Dispositif de mesure selon la revendication 4 ou 5, **caractérisé en ce que** le générateur de micro-ondes (23) présente un dispositif de régulation de puissance de haute fréquence et/ou est relié au dispositif d'analyse (22) pour la transmission d'informations sur la puissance de transmission réelle.

7. Dispositif de mesure selon l'une des revendications 4 à 6, **caractérisé en ce que** ladite au moins une sonde de mesure d'intensité de champ (20, 21) est reliée au dispositif d'analyse (22) via une ligne à haute-fréquence.

8. Dispositif de mesure selon l'une des revendications 4 à 6, **caractérisé en ce que** ladite au moins une sonde de mesure d'intensité de champ (20, 21) est directement raccordée à un mélangeur (31) pour abaisser la fréquence du signal HF à un signal FI, lequel est relié au dispositif d'analyse (22).

9. Dispositif de mesure selon l'une des revendications 4 à 6, **caractérisé en ce que** ladite au moins une sonde de mesure d'intensité de champ (20, 21) est directement raccordée à un dispositif redresseur réalisé en tant que diode (28, 29), lequel est relié au dispositif d'analyse (22) de préférence via un filtre passe-bas (30).

10. Dispositif de mesure selon la revendication 9, **caractérisé en ce que** la diode (28, 29) est disposée au pied de la sonde de mesure d'intensité de champ (20, 21) réalisée en tant que monopôle.
